(19) Europäisches Patentamt

European Patent Office

Office européen des brevets

(11) **EP 1 403 024 A1**

(12) **EUROPEAN PATENT APPLICATION**

(43) Date of publication:
**31.03.2004 Bulletin 2004/14**

(21) Application number: **02079014.3**

(22) Date of filing: **27.09.2002**

(51) Int Cl.⁷: **B29C 44/12**, B29C 70/66,
B29C 70/08, B32B 5/18,
B32B 5/26

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Lantor B.V.**
**NL 3901 RG Veenendaal (NL)**

(72) Inventors:
• **Anjema Pieter**
**3904 HL Veenendaal (NL)**
• **Lamers, Peter Hubertus**
**3904 PW Veenendaal (NL)**

(74) Representative: **Prins, Adrianus Willem et al**
**Vereenigde,**
**Nieuwe Parklaan 97**
**2587 BN Den Haag (NL)**

(54) **Improved core material**

(57)     The present invention relates to a drapable core material suitable for use in closed mould systems, having a compression-resistance of more than 75 % at 1 bar pressure, wherein core material is based on at least one fibrous web containing a foam-structure within the web, said foam-structure being formed of a plurality of members, which members are separated from each other by channels which channels are permeable to resin. The invention further relates to a laminate comprising such core material, a method for manufacturing the core material and a method for manufacturing such laminate.

Figure 3

EP 1 403 024 A1

**Description**

The invention relates to a core material for use in the production of fibre reinforced plastics materials, more in particular suitable for application in closed mould systems.

Plastics reinforced with fibrous webs, are often used for manufacturing shaped articles such as automotive or industrial parts, e.g. tanks, bath tubs, road signs, cladding panels, boats, caravans, etc.

Fibrous webs are suitable as a reinforcement for all kinds of cured synthetic plastics materials, such as polyester resin or epoxy resin. Generally, the incorporation of a fibrous web in a resin material results in increased strength, stiffness, fatigue life, fracture toughness, environmental resistance, increased temperature stability, reduced weight and reduced manufacturing cost of said resin material.

Use of core materials in fibre reinforced plastics has already been known for decades. The aim thereof is on the one hand to decrease the amount of resin required, resulting in cost and weight savings, and on the other hand to improve some mechanical properties of the material, more in particular the bending stiffness.

US-A-3,676,288 discloses non-expanded micro-spheres whch are applied to or incorporated in a fibrous web by means of a binder, for example, a polyacrylonitrile latex. As the binder is dried and cross-linked, the spheres are attached to the fibrous web and expanded.

EP-A- 0 190 788 is directed to the use of a fibrous web, incorporating micro-spheres, for the manufacture of objects reinforced with such a fibrous web. According to said patent application, the micro-spheres are mainly contained within the web and arranged in a pattern in which areas of the web, which contain micro-spheres, are separated from each other by areas which contain virtually no micro-spheres.

In the production of fibre reinforced plastics materials two prominent methods are available, one being based on the manual impregnation of the fibre materials (hand lay-up; spray-up) and another being based on the use of closed moulds. In the latter system - which is usually automated - the fibre reinforcing material is placed in a mould, which is closed and subsequently filled with resin. An important advantage of these closed mould systems resides inter alia in the reproducibility of the properties of the product (better tolerances), in environmental considerations, in enhanced surface properties and in enhanced mechanical properties. It is also possible to apply higher fibre volume fractions.

Use of the above described core materials in closed mould systems have for a long time given rise to difficulties in reconciling the various requirements to be met by a core material for use therein. These properties are inter alia.

- good compression resistance,
- fast flow of resin through the core material in all directions,
- low resin uptake,
- decreased shrink (i.e. compensate for resin shrinkage), and
- good drapability (i.e. low bending stiffness).

In particular the first two requirements have been very difficult to reconcile for a long time. It will be clear, that the open structure that is necessary for obtaining a good resin flow in the plane of the core material, will tend to be at the expense of the compression-resistance. Further, a low resin uptake, which can be obtained by a large volume of foam in the web, will be incompatible with the good flow of resin. Also the drapability characteristics are not easily compatible with the compression resistance and the low resin uptake. In order to address these requirements a core material has been developed as is disclosed in EP 1 010 793. In a preferred embodiment, the core material contains micro-spheres distributed over the core material in a regular pattern.

It has however been found that the surface quality of these prior art materials, such as the material disclosed in EP 1 010 793 is not always satisfactory, in particular not with respect to the visual appreciation of the surface (in particular with respect to the occurrence of a print-through effect) or surface finish. Such visual appreciation or surface finish can for example be important in shaped articles such as panels for cars, trucks, etc. Methods to assess the visual appreciation include panel tests. It is also possible to assess a quantitative indication of the surface finish by diffraction measurement of the surface. The orange peel value of the surface is for example a suitable parameter to this purpose. Instruments to measure the orange peel value are known in the art and are commercially available, e.g. instruments using the D-Sight technique, developed by Diffracto Ltd (Canada). This technique is discussed in Reynolds et al. "Theory and applications of a surface inspection technique using double-pass retroreflection", Optical Engineering, Vol 32, No 9, pp. 2122-2129, 1993 and in J.H. Heida and A.J.A. Bruinsma; "D-Sight Technique for Rapid Impact Damage Detection on Composite Aircraft Structures"; Presented at: the 7th European Conference on Non-Destructive Testing in Copenhagen, 26-29 May 1998; available at NDT.net - June 1999, Vol. 4 No. 6

Accordingly, it is an object of the present invention to provide a new core material, which can be used as an alternative to known core materials in closed mould system applications, in particular for the manufacture of shaped objects wherein the visual appreciation of the surface is relevant.

It has been found that this object can be realised by a drapable core material with a high compression resistance, which core material contains members of relatively dense material and channels, being open or containing material with a relatively low density, wherein the members and channels are distributed in a specific way and/or wherein the members and channels have specific dimension.

The present invention accordingly relates to a core material suitable for use in closed mould systems, said core material being drapable, having a compression-resistance of more than 75% at 1 bar pressure, preferably of at least 80 % at 1 bar pressure, more preferably of at least 90 % at 1 bar pressure, even more preferably of at least 95 % at 1 bar pressure, wherein the core material is based on at least one fibrous web containing a foam-structure within the web, said foam-structure being formed of a plurality of members, wherein the members are irregularly distributed within or upon the web, wherein the members are separated from each other by channels which channels are permeable to a resin.

It has been found that a core material according to the invention maintains a very good drapability, compression resistance and a suitable permeability, despite the irregular distribution of members, whilst the surface quality, in particular with respect to the visual appreciation is improved in comparison to known materials, e.g. a core material provided with a regular pattern of hexagons, such as Soric®, wherein a print-through effect, at the areas between the members (i.c. hexagons) may be clearly visible, after impregnation with the resin and drying. It has been found that such a print through does not occur or at least to a lesser extent with a core material according to the present invention.

Further it has been found that a core material according to the present invention has an improved drapability and/or permeability in comparison to commercially available core materials.

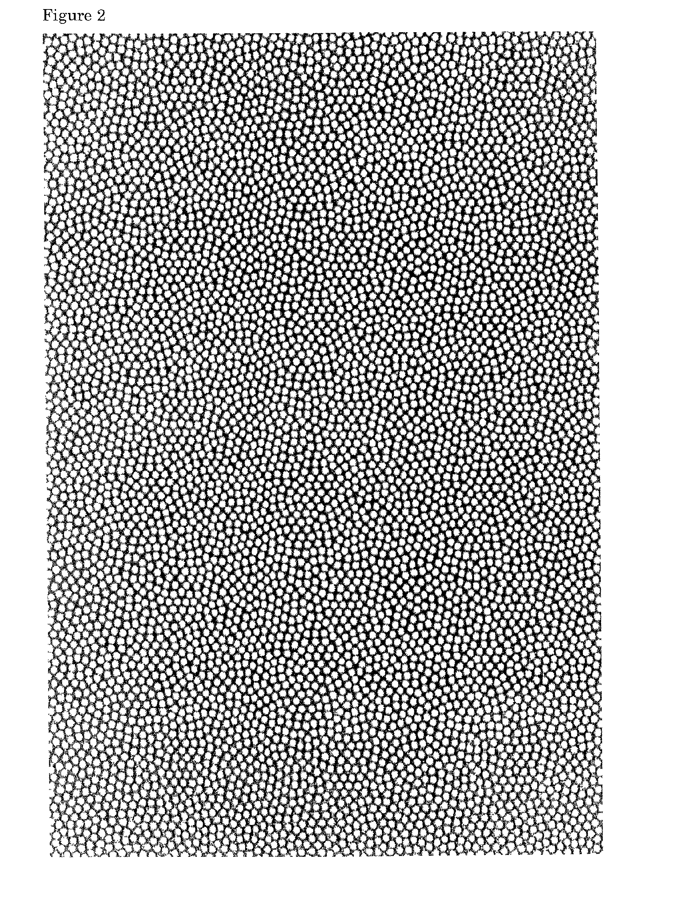

Figures 1 and 2 show examples of how the members (the light areas) can be distributed over the core material. The dark areas represent the channels. These channels provide by and large the permeability in a core material represented by Figure 1 or 2.

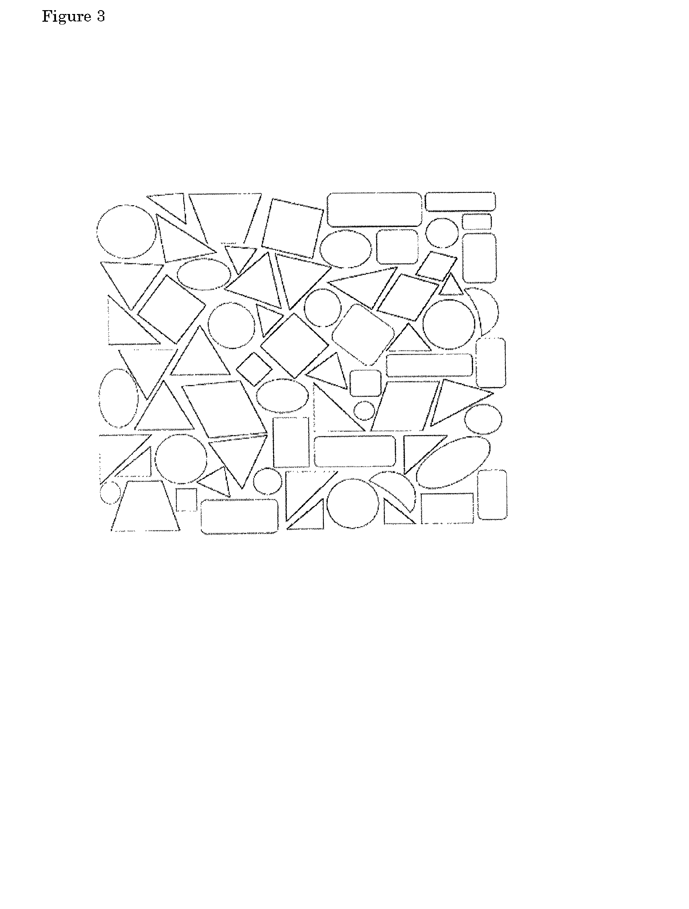

Figure 3 shows an schematic example of a core material containing a plurality of differently shaped members

Figure 4a shows a photograph of a commercially available core material (Soric®, with 6 mm hexagons) used in the comparison example.

Figure 4b shows a photograph of a core material according to the invention used in Example 1.

Figure 4c shows another core material according to the invention.

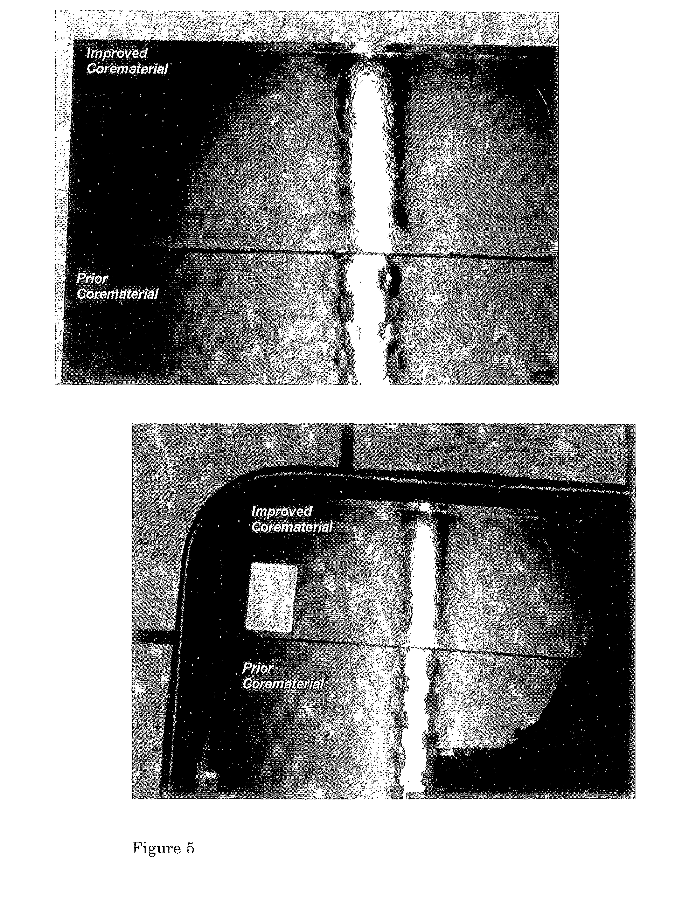

Figure 5 shows two photographs comparing a composite comprising a core material according to the invention and a composite comprising a Soric® core material (each photographs shows the same two composites, but photographs were taken from a different angle). The material according to the invention clearly has a more uniform visual appearance. This is further accentuated by the light bar in the central section of the plate, which is the reflection of the light of a common fluorescent tube. The distorted shape of the reflection in the prior art material compared to the material according to the invention is a striking illustration of the visual improvement, due to use of the new core material.

Figure 6 is a composite according to the invention, wherein a core material was used with a permeability of about $1.5 \times 10^{-9}$ m$^2$. There is no print-through effect visible at all, making this composite very highly visually appreciated.

Figure 7 shows the diffraction pattern obtained by a D-Sight system of a composite based upon Soric® core material formed of 6 mm hexagons. The inserted rectangle in the lower middle section of the figure shows a representation at higher resolution.

Figure 8 shows the diffraction pattern obtained by a D-SIGHT system of a composite based upon Soric® core material formed of 3.5 mm hexagons.

Figure 9 shows the diffraction pattern obtained by a D-SIGHT system of a composite based upon a core material according to the invention (the core material having a pattern as shown in Figure 1, 1:1 scale).

An irregular distribution as used herein can be defined by its pattern repeat. The pattern repeat can be represented by the length (when determined in one direction) or area forming a pattern that is repeated in a different part of the material. Good results have been achieved with an irregular distribution, characterised in that in at least in one direction of the x-direction and the y-direction and preferably in both the x-direction and the y-direction, the pattern repeat of the pattern of members is at least 0.5 cm, preferably at least 1 cm. The upper limit is not critical. For practical reasons, the upper limit may be determined based upon the technique by which the core material is made. For example, screen-printing is a very suitable technique to make a core material. The upper limit of the pattern repeat, will then in general by determined by the circumference and/or width of the screen. For example, screens with a circumference of up to about 92.5 cm are commonly used. In practice the upper limit will generally be about 140 cm.

It is also possible to determine the pattern repeat based upon the number of members forming a repeating pattern. Good results have been achieved with an irregular distribution, wherein in at least in one direction of the x-direction and the y-direction no repetition occurs in any pattern formed by at least 10 adjacent members and preferably in any pattern formed by at least 25 adjacent members. More preferably no repetition is visible in any members pattern in an area formed by at least 100 adjacent members.

The irregular distribution is preferably mainly a random distribution, i.e. a distribution wherein no repetition of pattern of the members occurs within the plane of the core material. A core material with a random distribution has been found to be very suitable for manufacturing a shaped article with a very high surface quality, in particular with respect to the visual appreciation.

Depending upon its intended use, in particular with respect to the need of a resin to be able to penetrate into the core material within a particular time-span, the permeability for resin of a core material according to the invention can be chosen in a wide range. Particularly good results have been obtained with a core material having a permeability in the plane of the material for resin of at least $1 \times 10^{-9}$ m$^2$. In such a material the flow properties of the resin have been found to be very satisfactory. For even better flow properties, the permeability is preferably at least $1.5 \times 10^{-9}$ m$^2$, more preferably at least more than $5 \times 10^{-9}$ m$^2$.

The permeability is largely provided by the channels, formed by the areas containing no members. The permeability (k) is defined herein according to the law of Darcy for steady flow as

$$q = \frac{k.A}{\eta} \cdot \frac{\Delta p}{\Delta x},$$

wherein q is the resin flow in m$^3$/s, A is the total surface of the cross section through which the resin flows in m$^2$, $\eta$ is the viscosity of the resin in Ns/m$^2$, $\Delta p$ is the pressure difference in N/m$^2$ and $\Delta x$ is the distance over which the pressure difference exists and the resin flows in m. The permeability is defined in the plane of the material, that is not perpendicular to the material, but parallel to the upper and lower surface thereof.

The drapability is defined herein as the ability of the core material to conform to a contoured surface, in particular a mould. In particular a core material as defined herein is drapable, if it can be bent around a corner with a radius of 10 mm or less, without substantial irreversible deformation of the core material. This allows the material to be draped in a good way in the mould, thus enabling the production of smoothly shaped products.

Although the above defined drapability is in general sufficient for use in close systems, it is an advantage that the present invention provides a core material with a much better drapability, such as a drapability that allows bending around a corner with a radius of only 5 mm or less.

The compression resistance is defined herein as the ability to resist a force that tends to crush or buckle. It is measured by determining the height of the material before applying a pressure and during applying 1 bar pressure perpendicular to the plane of the material. The compression resistance is calculated as 100 % x (height of the material at 1 bar pressure)/height of the material at no pressure).

The present invention combines the careful balancing of the properties of the various components, fibres, binder, foam structure and the like to obtain a suitable balance between properties such as compression-resistance, drapability and permeability in the core material on the one hand and to obtain a high surface quality in a shaped article formed with such a core material on the other hand. Suitable conditions can be determined by the skilled professional by routine considerations and upon the information disclosed herein and in the cited references

If a good surface quality is important but there is also a desire to limit the use of resin and/or the weight of the final composite one may choose to use a material for the members with relatively light material, e.g. a microsphere foam structure; a material with relatively large members, e.g. in the range of 1-3 mm; a material with relatively narrow channels between the members, e.g. of less than 1 mm; and/or a relatively low free volume, e.g. in the range of 40-60 vol %.

If the surface quality is of the utmost importance and savings in weight or cost are of lesser importance, one may to choose a core material with relatively small members, e.g. in the range of 0.5-2 mm, a high degree of irregularity of the member pattern and/or a resin with a low tendency to shrink after curing, e.g. an epoxy resin.

If drapability and surface quality should be relatively high, one may choose to use relatively wide channels, e.g. with an average diameter of 0.5-2 mm, in combination with relatively small members, e.g. with an average diameter of less than 1 mm, a high degree of irregularity and/or a relatively flexible fibre material, e.g comprising polyester fibres and acrylate binder.

The members form 'isles' within or upon the web, which members are at least largely surrounded by channels, through which channels resin can flow. The channels are largely free of web material or fibres, although some fibre material may be present to provide sufficient consistency of the core material. As a rule the material content in the channels should be low enough to allow a sufficient permeability to allow sufficient penetration of resin, preferably it should allow a permeability of at least $1 \times 10^{-9}$ m$^2$.

The members are typically made of a closed cell foam structure, e.g. from a material that is usable as a binder material as disclosed herein. The members can also comprise micro-spheres or being formed thereof. These micro-spheres will be discussed below.

The members largely contribute to the compression resistance of the core material and are in general substantially impenetrable to the resin. The members in any case have a permeability of substantially less than $1 \times 10^{-9}$ m$^2$.

The members can have any shape. Good results have been achieved with a core-material wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal or octagonal cross-sections.

The irregular distribution may be obtained by using more or less uniformly shaped members, with the same or different dimensions. Good results have for example been achieved with a core material wherein at least the majority and preferably substantially all members have a circular or ellipsoidal cross-section parallel to the plane of the material.

The irregular distribution may be obtained by using a variety of differently shaped members. Good results have been achieved with a core material wherein at least the majority and preferably substantially all members have a polygonal cross-section parallel to the plane of the material. The differently shaped members in such a core-material are preferably selected from the group of triangles, tetragons, pentagons and hexagons.

It has been found that particularly good results with respect to surface quality are obtained with a core material wherein at least the majority of the members and preferably substantially all members have a diameter, as defined by the diameter of the enveloping circle, in the plane of the material of less than 3 mm. Preferably, at least the majority of members and more preferably substantially all members have a diameter in the plane of the material of less than 2.5 mm. Very good results have been obtained with a core material wherein at least the majority of the members have a diameter of less than 1.5 mm.

The lower limit of the diameter of the members is not particularly critical. For typical applications, at least the majority of the members will have a minimum diameter of at least about 0.2 mm. For practical reasons the diameter will generally be at least about 0.5 mm. Factors, other than the surface quality, to which the diameter of the members may be relevant is the extent to which one wishes to restrict the use of resin in a closed mould system.

Preferably at least the majority of the channels between members have an average diameter of less than 2 mm, more preferably of less than 1 mm, even more preferably of less than 0.5 mm. The lower limit of the channels is not particularly critical, as long as the permeability remains high enough, as defined herein. A suitable lower limit can routinely be determined by the skilled professional, depending upon the resin and moulding conditions. Typically the majority of the channels will have a minimum average diameter of at least 0.3 mm. Advantages of using a relatively high diameter, e.g. 0.5-2 mm may be a fast flow of resin through the material and a relatively high drapability. Advantages of a relatively low diameter, e.g. in the range of 0.3 to 0.5 mm may include relatively low resin uptake and a higher surface quality.

The thickness of the core material can be varied within wide ranges, e.g. between 1 and 4 mm, preferably between 1.5 and 3 mm, although thicker or thinner core materials can be made in accordance with the invention. The members usually at least extent to the majority of the thickness of the material.

Preferably the fibrous web containing a foam structure has a free volume of less than 80 vol.%, more preferably of 50-70 % by volume. In this respect the free volume is understood to mean the volume of the material that can be accessed by resin. The remainder of the volume will be formed by the members (and some fibres).

A preferred web comprises at least 20 wt.% of fibres, up to 80 wt.% of binder material, which is optionally foamed. The closed cell foam structure forming the members can be prepared from (optionally expandable) micro-spheres which are introduced into the web using an optionally foamed binder material.

Good results have been obtained with a core material containing micro-spheres having an activation temperature of at least 120°C, wherein the free volume in the web is at most 80 vol.%. The web may be mechanically, physically or chemically bonded.

Much preferred is a core material comprising at least 30 wt.% of fibres, up to 70 wt.% binder material, optionally also containing expandable micro-spheres. In practice the amount of expandable micro-spheres will generally be less than 15 wt. %, preferably 1-10 wt % based upon the total weight of the core material.

Preferably the micro-spheres are expandable and more preferably they have an activation temperature of at least 120°C.

Very good results have been achieved with a core material wherein expanded thermoplastic micro-spheres, e.g. of a thermoplastic polymer based on an alkylmethacrylate, such as methyl methacrylate, acetonitril (such as polyacetonitril (PAN)), vinilydene chloride or a combination thereof, are present in the web, said micro-spheres having an initial expansion temperature below the curing temperature of the binder. Micro-spheres are commercially available, e.g. Expancel[TM] by AKZO-NOBEL.

The core material of the invention may be prepared using techniques known for producing the prior art core materials for the manual production of fibre reinforced plastic materials. The preparation may for example be based upon the methodology as described in EP 1 010 793. Preferably the material is made by rotary screen printing.

In a preferred method to produce a core material, expandable micro-spheres are introduced into a fibrous web, using a binder material, followed by expanding the micro-spheres and curing the binder. In a much preferred method the micro-spheres start to expand at a temperature below the curing temperature of the binder material.

The core material may suitably be prepared in a method wherein a non-woven is printed with a foam or an unfoamed binder, also containing expanded micro-spheres, such as polymeric, glass or ceramic micro-spheres.

In the case of use of expandable micro-spheres, it is preferred to use the following process. First a dispersion of expandable micro-spheres in a binder material is prepared, which dispersion is optionally foamed. The initial expansion temperature of the micro-spheres is preferably below the curing temperature of the binder material. Subsequently, the non-woven, having a thickness less than the required final thickness, is screen printed with the dispersion. Following this, the material is dried and heated to the expansion temperature of the micro-spheres. Upon expansion the temperature is further raised with the result that the binder material cures and sets the micro-spheres in the web. In this way a core material according to the invention can be prepared.

The initial expansion temperature of the micro-spheres is preferably between 120 and 190°C. The curing temperature of the binder is preferably above 170°C.

The fibrous web to be used according to the invention will usually be a non-woven, which may be reinforced, based on conventional fibres. The manufacture of suitable non-wovens has for instance been described by Dr. H. Jörder, "Textilien auf Vliesbasis" (D.V.R. Fachbuch, P. Kepper Verlag). It is also possible to use a combination of a non-woven fibrous web with a reinforcing fabric, one within or on top of the other.

The fibres of the web are preferably selected from the group of natural fibres, glass fibres, metal fibres, ceramic fibres or synthetic fibres, such as acrylic, polyethylene, polypropylene, polyester, polyamide (aramide), carbon or polypropylene fibres and combinations thereof. More preferrably the fibres are selected from the group of glass fibres, polyester fibres, polyester-polyethylene bicomponent fibres and combinations thereof. Very good results have been achieved with polyester fibres. Polyester fibres have been found to have very good adherence with the resin and tend to have a favourably low moisture content.

According to a very convenient method, the non-woven is based on a combination of polyester fibres and polyethylene-polyester bicomponent fibres (or other low temperature melting fibres or powders). These types of webs have been thermally bonded by the bicomponent fibres. By heating the web to the initial expansion temperature of the micro-spheres, which is above the melting point of the polyethylene bond, the web becomes loose and will expand easily. After expansion, and curing the final material again has its good bond, resulting in the advantageous combination of properties of the invention. At the same time the web is very easy to handle at the initial stages of the process, thanks to the thermal bonding.

The micro-spheres that may be provided in a fibrous web according to the invention preferably at least consist of a thermoplastic synthetic resin material that is solid at room temperature. Examples of suitable resins include polystyrene, styrene copolymers, polyvinyl chloride, vinyl chloride copolymers, vinylidene chloride copolymers and so forth.

In expandable micro-spheres, usually a blowing agent has been incorporated. The presence of this blowing agent is responsible for an expansion of the micro-spheres when a fibrous web, comprising the micro-spheres, is cured. Thus, the micro-spheres are pressed into the fibrous web in unexpanded form, for example by means of a paste, such as a foam paste. The blowing agent may be a chemical or physical blowing agent, such as azodicarbonamide, isobutane, isopentane, pentane, freon, iso-octane etcetera.

The micro-spheres advantageously have a diameter of 4-20 µm in unexpanded state, and a diameter of preferably 10-100 µm in expanded state. After expansion of the micro-spheres, the amount thereof in the web is in general 10 to 60 vol.%. This amount depends on the amount of micro-spheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilizers, fillers and or thickeners, as has been described in EP-A-0 190 788.

The present invention further relates to a laminate at least consisting of a core material according to the invention, laminated with at least one fibrous fleece. The laminate may be formed in any way, and preferably by stitching or gluing the at least one fleece to one or both sides of the core material. Suitable methods of forming the laminate are known in the art.

An advantage of providing a laminate is the ease of use. A laminate allows easy placement of the combination of core material and fleeces in one step. Thus the manufacturer of a composite does not have to staple different layers (e.g. respectively bottom fleece, core material, top fleece) into the mould in separate steps.

In principle any fibrous fleece suitable for preparing a composite can be used. Preferred fibrous fleeces include glass fibre fleeces, carbon fibre fleeces, polyaramide fibre fleeces and hybrids thereof, e.g. glass-carbon fibre fleeces, glass-polyaramide fibre fleeces or carbon-polyaramide fibre fleeces.

A core material according to the invention has inter alia been found very suitable to make thin laminates, whilst obtaining a surface with a highly desirable smooth appearance. For example a laminate according to the invention may very suitably have a total thickness of 2 to 10 mm, preferably of 3 to 6 mm. Good results have inter alia been realised with a laminate of a core material with a thickness of 1-2 mm covered at both sides with a fleece, preferably a glass fleece, with a thickness of approximately 0.4-0.8 mm, e.g. a glass fleece of approx. 225-450 g/m². Thus a laminate can be obtained with a thickness of about 2-3 mm, which laminate has been found to have a very good surface quality after being cured with a resin, in particular with an epoxy resin.

The invention also encompasses a method for manufacturing a shaped article, wherein a fibrous web as described hereinabove is impregnated with a liquid resin and a hardener there for.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin.

Suitable hardeners for use in a method according to the invention are any hardeners which can be used to cure the chosen liquid resin. These systems are known to the skilled person. It belongs to the standard knowledge of the person skilled in the art to be able to combine resin and hardener so as to obtain optimum results.

The present invention further relates to a shaped article based upon a core material according to the invention, in particular a shaped article obtainable by a method according to the invention wherein a core material according to the invention is impregnated with a resin and cured. In particular, the present invention relates to such a shaped article having a orange peel value or D-Sight index of less than 30, preferably less than 25, more preferably of 10-20, as determined by the D-Sight technique (e.g. on a D-SIGHT system, supplied by Diffracto Ltd., Canada, using the conditions as specified in the Examples.

Besides solving the problem of improving surface quality and/or improving the visual appreciation, preferably with respect to reducing the print-through effect, in a core material based shaped article by providing a core material with an irregular pattern, it has also been found that such a problem can be solved by providing a core material with relatively small members and relatively small channels. Accordingly, the present invention also relates to a core material suitable for use in closed mould systems, said core material being drapable, having a compression-resistance of more than 75% at 1 bar pressure - preferably at least 80 % at 1 bar pressure, more preferably at least 90 % at 1 bar pressure, even more preferably at least 95 % at 1 bar pressure - wherein core material is based on at least one fibrous web containing a foam-structure within the web, said foam-structure being formed of a plurality of members, which members are separated from each other by channels that are permeable to resin, wherein the members have an average diameter - as defined by the diameter of the enveloping circle, in the plane of the material - of less than 1.5 mm, preferably of 0.2-1 mm, and wherein the channels have an average diameter of less than 0.75 mm, preferably of 0.3-0.5 mm.

For practical reasons the average diameter of the members will typically be at least 0.5 mm.

The members and channels may be distributed in a more or less regular way, e.g. with a pattern repeat of less than 1 cm, more in particular of less than 0.5 cm, or in an irregular way as defined above.

For the other parameters, in particular permeability, nature of the materials of which the core material is made, shape of the members, free volume of the web, the conditions as described above apply.

The invention will now be elucidated by the following, non-restrictive examples.

*Comparison example*

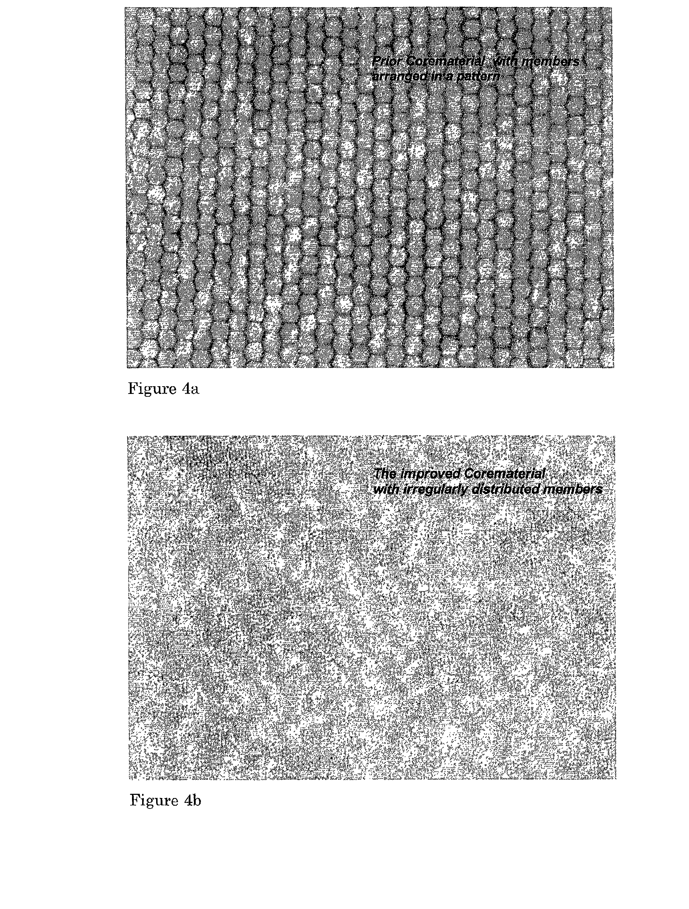

Soric® core material (Lantor, Veenendaal, the Netherlands) as shown in Figure 4a with hexagon members having a diameter of approximately 6 mm, a permeability of 5 x 10⁻⁹ m² and a material density of 450 g/m² was impregnated with polyester resin (Synolite 6811-N-1, DSM resins) in a closed mould system by vacuum injection at a pressure of 0.2 bara.

Figure 5 shows the appearance of the composite (marked as "prior core material"). The orange peel value/ D-sight index of the surface was determined using a D-SIGHT system with the following parameter settings:

| | |
|---|---|
| Camera angle | 30°, Camera height: 570 |
| Application point | "red"line |
| Fragment size | Top left corner: x=115, y=271 |
| | Bottom right corner: x=385, y=386 |

WDI 28X24

Block size 10X5

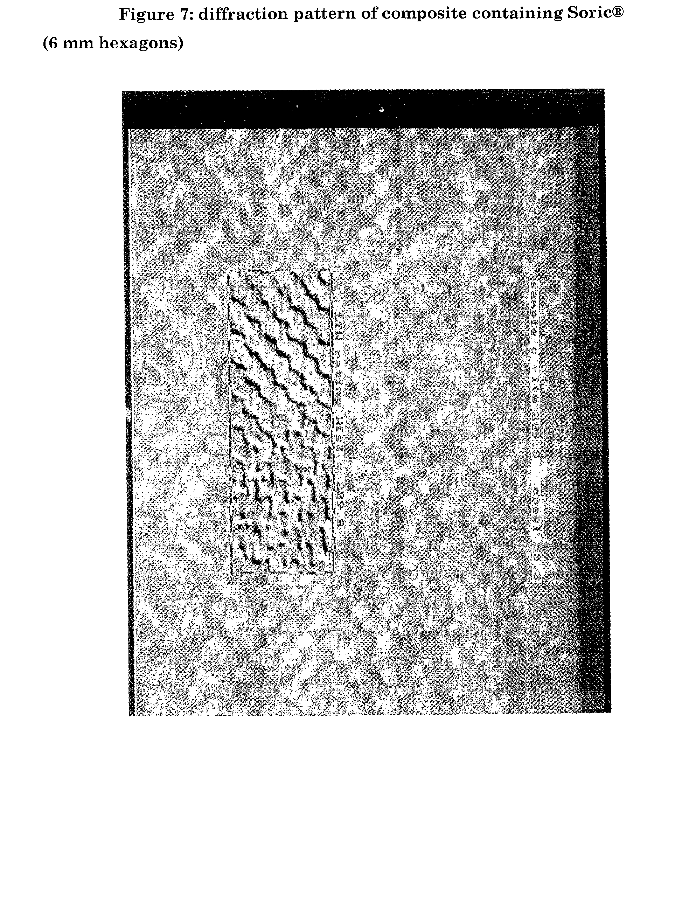

The orange peel was found to be 55.3. The graph representing the composite as observed via the D-SIGHT system is shown in figure 7.

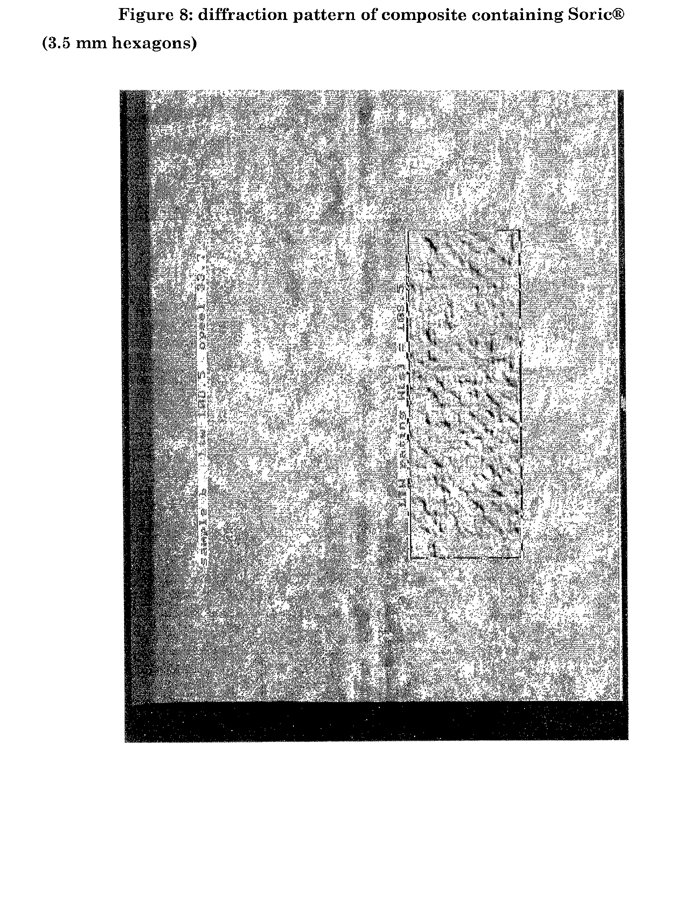

A second comparison example was performed in the same way, but with a Soric® core material having hexagons with a diameter of about 3.5 mm and a permeability of about 5 x $10^{-9}$ $m^2$. The orange peel was found to be 33.7. A graph representing the composite as observed via the D-SIGHT system is shown in Figure 8.

*Manufacture of the core material*

A web was prepared consisting of 80 wt % polyester fibres and 20 wt % binder (acrylate).
A binder-microsphere mixture was made by mixing 5 kg of expandible microspheres (Expancel$^{TM}$, AKZO-NOBEL into 95 kg of acrylate dispersion. The solids content was about 52 wt %.
The binder-microsphere mixture was applied to the web by rotary screen printing, wherein the mixture was pressed into the web. The screen contained round irregularly distributed holes with an approximate diameter of about 0.6 mm, in a density of about 40 holes per $cm^2$.
After printing the web was dried at about 110 °C and subsequently expanded to a thickness of about 2 mm at a temperature of 200 °C. Simultaneously the web was cured.

*Example 1*

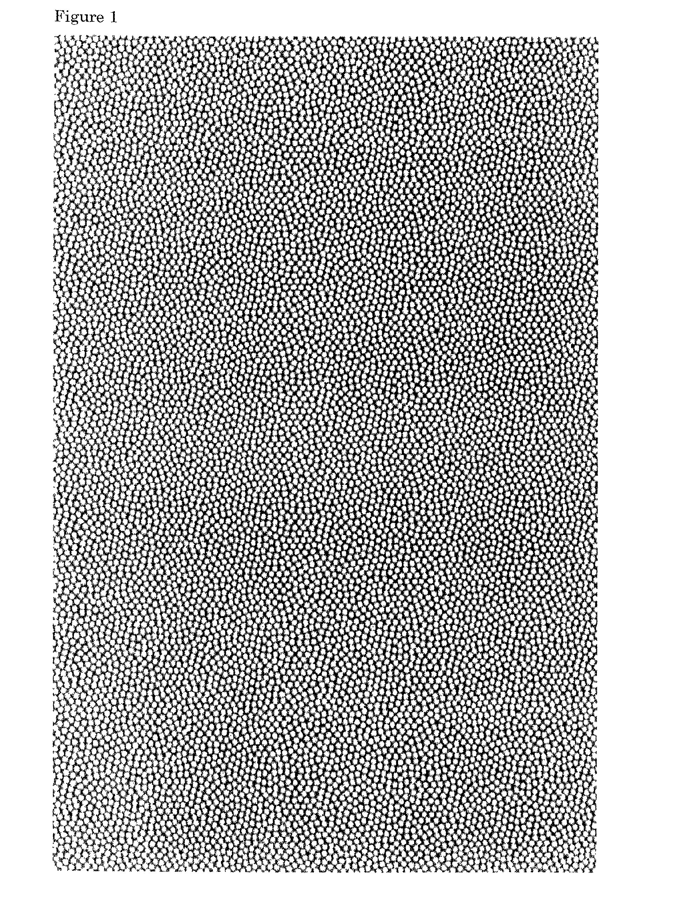

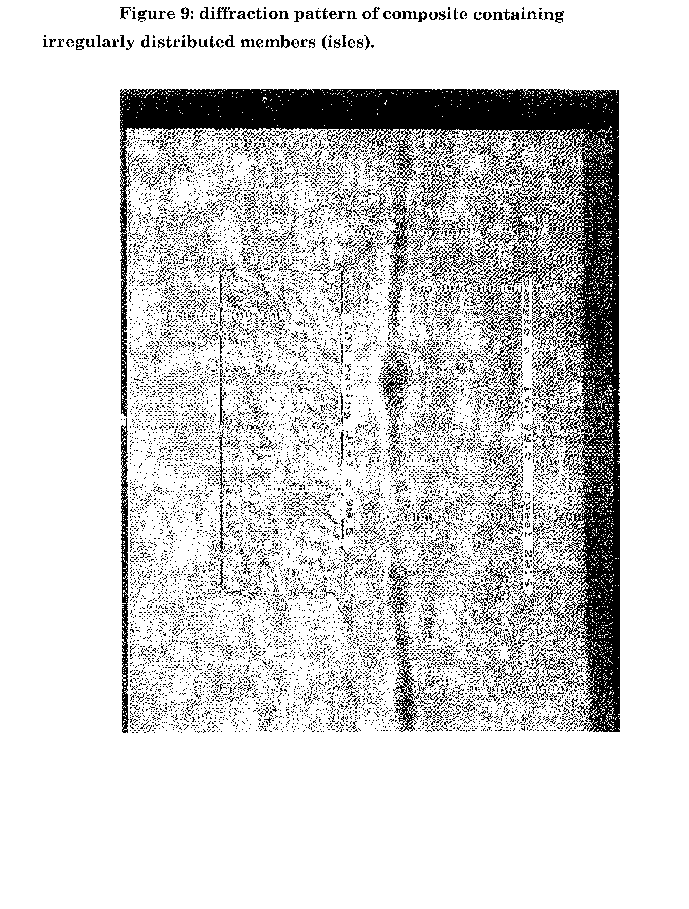

A core material with an irregular pattern as shown in Figure 1 wherein the members had an average diameter of approximately 1 mm, with a permeability of about 1.5 x $10^{-9}$ $m^2$ and a material density of 150 g/$m^2$ was impregnated according to the same procedure as described in the comparison example.
Figure 5 shows the appearance of the composite (marked as "improved core material").
Figure 5 clearly demonstrates that the appearance of the core material according to the invention yields in a composite of which the surface has a much smoother appearance, resulting in a higher visual appreciation.
A graph representing the composite as observed via the D-SIGHT system is shown in figure 9. The orange peel was found to be 20.6.

*Example 2*

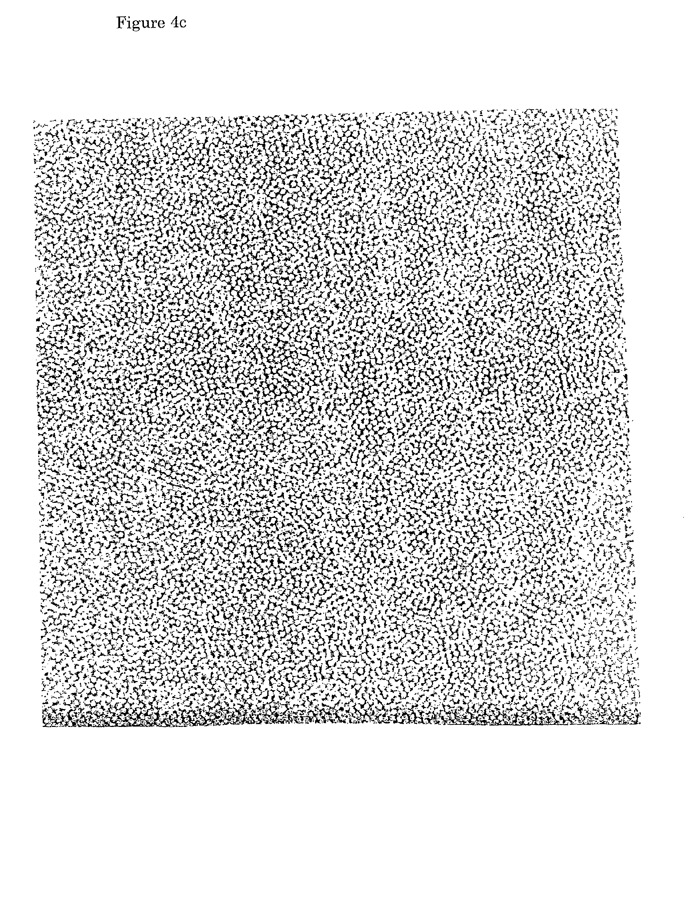

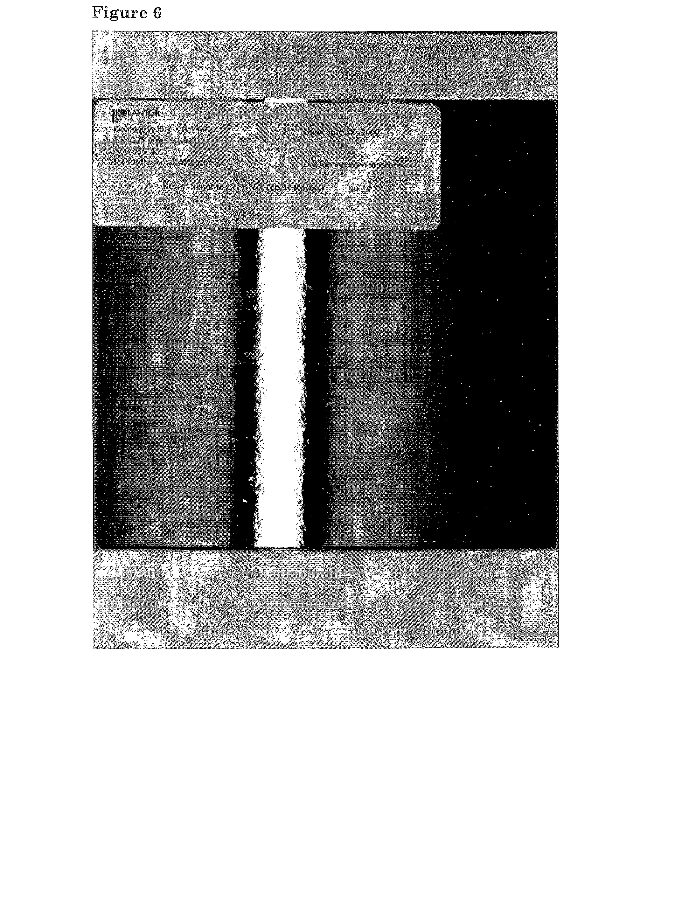

Figure 6 shows another composite according to the invention, made with a core material as shown in figure 4c, having a density of 225 g/$m^2$, which also shows a very uniform appearance.

**Claims**

1. A core material suitable for use in closed mould systems, said core material being drapable, having a compression-resistance of more than 75 % at 1 bar pressure, which core material is based on at least one fibrous web containing a foam-structure within the web, said foam-structure being formed of a plurality of members, which members are irregularly distributed within or upon the web, which members are separated from each other by channels, which channels are permeable to resin.

2. A core material according to claim 1, wherein at least the majority of the members have a diameter, as determined by the enveloping circle surrounding the member, in the plane of the material of less than 3 mm, preferably of less than 2.5 mm.

3. A core material according to any of the preceding claims, wherein at least the majority of the channels have an average diameter of less than 1 mm.

4. A core material suitable for use in closed mould systems, said core material being drapable, having a compression-resistance of more than 75 % at 1 bar pressure, which core material is based on at least one fibrous web containing a foam-structure within the web, said foam-structure being formed of a plurality of members, which members are separated from each other by channels that are permeable to resin, wherein the members have an average diameter - as defined by the diameter of the enveloping circle, in the plane of the material - of less than 1.5 mm and wherein the channels have an average diameter of less than 0.75 mm.

5. A core material according to any of the preceding claims, wherein the channels have an average diameter of 0.3-0.5 mm.

6. A core material according to any of the preceding claims, wherein the members have an average diameter of 0.2-1 mm.

7. A core material according to any of the preceding claims, wherein the permeability in the plane of the material for resin is at least $1 \times 10^{-9}$ m$^2$.

8. A core material according to any of the preceding claims, wherein the members are randomly distributed within or upon the web.

9. A core material according to any of the preceding claims, wherein the core material contains a plurality of differently shaped members.

10. A core material according to any of the preceding claims, wherein the free volume of the web is 40-80 % by volume, preferably 60 to 70 % by volume.

11. A core material according to any of the preceding claims, wherein the cross-sections parallel to the plane of the material of at least the majority of the members are selected from the group consisting of circular, ellipsoidal and polygonal cross-sections.

12. A core material according to any of the preceding claims wherein at least part of the members contain micro-spheres.

13. A core material according to any of the preceding claims, wherein the fibres of the web are selected from the group consisting natural fibres, glass fibres, metal fibres, ceramic fibres, synthetic fibres and combinations thereof.

14. A laminate at least consisting of a core material according to any of the preceding claims, laminated with at least one fibrous fleece.

15. A laminate according to claim 14, wherein the laminate has a total thickness of 1 to 10 mm, preferably of 2 to 5 mm.

16. A laminate according to claim 14 or 15, wherein at least one fibrous fleece is selected from the group consisting of at least one type of fibre selected from the group consisting of glass fibres, carbon fibres and polyaramide fibres.

17. A laminate according to any of the claims 14-16 wherein the at least one fibrous fleece is glued or stitched to the core material.

18. A process for preparing a shaped article, said process comprising placing a core material according to any of the claims 1-13 optionally in combination with one or more other non-woven fleeces, or a laminate according to any of the claims 14-17 in a closed mould, introducing a liquid resin into the mould and curing the resin to produce the article.

19. Process according to claim 18, wherein the resin is a polyester resin, a phenylester resin, an epoxy resin, a polyurethane resin, a melamine-formaldehyde resin or a phenol resin.

20. A shaped article obtainable by a method according to any of the claims 18 or 19.

21. A shaped article, based upon a core material according to any of the claims 1-13 or a laminate according to any of the claims 14-17.

22. A shaped article according to claim 21, having a diffraction index as represented by its orange peel value of less than 30, preferably of less than 25, more preferably of 10-20.

23. Process for producing a core material according to any of the claims 1-13, said process comprising introducing a foamed or foam generating material into a fibrous web using at least one binder material and setting a foam in the web by curing the binder material.

24. Process according to claim 23, wherein the foamed or foam generating material is introduced into the web by rotary screen printing.

Figure 1

Figure 2

Figure 3

Figure 4a

Figure 4b

Figure 4c

Figure 5

Figure 6

Figure 7: diffraction pattern of composite containing Soric®
(6 mm hexagons)

Figure 8: diffraction pattern of composite containing Soric®
(3.5 mm hexagons)

Figure 9: diffraction pattern of composite containing irregularly distributed members (isles).

**European Patent Office**

## EUROPEAN SEARCH REPORT

Application Number

EP 02 07 9014

| DOCUMENTS CONSIDERED TO BE RELEVANT | | | | CLASSIFICATION OF THE APPLICATION (Int.Cl.7) |
|---|---|---|---|---|
| Category | Citation of document with indication, where appropriate, of relevant passages | | Relevant to claim | |
| D,A | EP 1 010 793 A (LANTOR BV) 21 June 2000 (2000-06-21) * the whole document * --- | | 1-24 | B29C44/12 B29C70/66 B29C70/08 B32B5/18 B32B5/26 |
| A | US 4 747 346 A (GEEL ADAM P) 31 May 1988 (1988-05-31) * column 4, line 46 - line 50; claim 14 * ----- | | 1-24 | |

TECHNICAL FIELDS SEARCHED (Int.Cl.7)

B29C
B32B
D06M

The present search report has been drawn up for all claims

| Place of search | Date of completion of the search | Examiner |
|---|---|---|
| THE HAGUE | 27 February 2003 | Van Wallene, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

Application Number

EP 02 07 9014

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

## LACK OF UNITY OF INVENTION
### SHEET B

Application Number

EP 02 07 9014

The Search Division considers that the present European patent application does not comply with the requirements of unity of invention and relates to several inventions or groups of inventions, namely:

1. Claims: 1-3,5-24

   A core material having a plurality of members with irregular distribution

2. Claim : 4

   A core material having a plurality of members with specific dimensions

**EP 1 403 024 A1**

## ANNEX TO THE EUROPEAN SEARCH REPORT
## ON EUROPEAN PATENT APPLICATION NO.

EP 02 07 9014

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2003

| Patent document cited in search report | | Publication date | Patent family member(s) | | Publication date |
|---|---|---|---|---|---|
| EP 1010793 | A | 21-06-2000 | EP | 1010793 A1 | 21-06-2000 |
| US 4747346 | A | 31-05-1988 | NL | 8500242 A | 18-08-1986 |
| | | | AT | 51904 T | 15-04-1990 |
| | | | AU | 578341 B2 | 20-10-1988 |
| | | | AU | 5261586 A | 07-08-1986 |
| | | | BR | 8600255 A | 30-09-1986 |
| | | | CA | 1278161 A1 | 27-12-1990 |
| | | | CN | 86100673 A ,B | 01-10-1986 |
| | | | DE | 3670317 D1 | 17-05-1990 |
| | | | DK | 35986 A | 30-07-1986 |
| | | | EP | 0190788 A1 | 13-08-1986 |
| | | | ES | 8800380 A1 | 01-01-1988 |
| | | | FI | 860265 A ,B, | 30-07-1986 |
| | | | IN | 164891 A1 | 01-07-1989 |
| | | | JP | 2058923 C | 10-06-1996 |
| | | | JP | 7084700 B | 13-09-1995 |
| | | | JP | 61207656 A | 16-09-1986 |
| | | | KR | 9311629 B1 | 16-12-1993 |
| | | | MX | 164823 B | 28-09-1992 |
| | | | NO | 860271 A ,B, | 30-07-1986 |
| | | | NZ | 214898 A | 29-03-1989 |
| | | | US | 4818583 A | 04-04-1989 |
| | | | ZA | 8600514 A | 24-09-1986 |

EPO FORM P0459

For more details about this annex : see Official Journal of the European Patent Office, No. 12/82

23